# EUROPEAN PATENT APPLICATION

(11) **EP 0 647 942 A1**
(43) Date of publication of application: **12.04.1995**
(21) Application number: 94113462.9
(22) Date of filing: 29.08.1994
(51) Int. Cl.: G11B 25/04

(54) **Disk drive with inverted base and method for its assembly**

(30) Priority: 12.10.1993 US 135609
(71) Applicant: Hewlett-Packard Company, Palo Alto, California 94304 (US)
(72) Inventor: Anderson, James C., Eagle, Idaho 83616 (US)
(74) Representative: Baillie, Iain Cameron

(57) **Abstract**

A disk drive adapted for mounting in an inverted position is illustrated and a method for its assembly is described. The disk drive has a base having opposite surfaces. Components of a head/disk assembly are attached to one surface of the base. A cover is attached by bosses to the one surface of the base at three points, in a position spaced from the base. A yieldable seal between the cover and the base completes the enclosure of the head/disk assembly. A printed circuit assembly is attached to the cover in a position on the cover substantially paralleling the base. Mounting points on the cover are adapted for attachment in a product, such as a personal computer, with the disk drive in an inverted position.

## Description

### FIELD OF THE INVENTION

The present invention generally relates to mounting systems for disk drives. More particularly, the present invention relates to hard mounting disk drive components in disk drives to achieve greater economy of manufacture and space utilization, and better drive and shock performance.

### BACKGROUND OF THE INVENTION

The electronics industry is struggling to cope with the changing demands of the market. For example, consumers in the personal computer market are constantly demanding more powerful and more compact machines, but also want these machines for less money. Partially in response to consumer demands, there is an industry trend away from shock mount systems to hard mount systems for hard disk drives.

Hard mount systems offer several advantages over shock mount systems in which generally the head disk assembly is attached to a mounting frame using relative thick elastomeric isolation components. Hard mount systems typically have simpler designs using fewer parts, and therefore are cheaper to manufacture. Also, disk drives utilizing hard mount systems are more space efficient, because sway space must be provided in shock mount systems to allow for the movement of head disk assemblies that are shock mounted. Another advantage of hard mount systems is that they provide better shock performance than the shock mount system. The elastomeric components and sway space used to isolate the disk drive from shocks can allow an initial shock to be amplified or to be translated into rotary movement. A hard mounted disk drive may receive a strong initial shock, but there will be no subsequent amplifications or rotary movement from the initial shock.

While superior in some aspects to shock mount systems, existing hard mount systems also present certain problems for manufacturers. Typical existing hard mounted disk drives use a die cast aluminum base to which the disk drive components, such as the spindle and disk platters, as well as read/write head stack, are attached to form the head disk assembly. The base also has the mounting points with which the disk drive is attached to the computer.

One of the problems that occurs when the hard mounted disk drive is installed is headshift caused by distortion of the base when the screws or other devices are tightened at the mounting points. This distortion causes a misalignment between the read/write head stack and data tracks on the disk platter surfaces. This misalignment is critical since the tolerances for operation of disk drives are very small there being presently and are on the order of two thousand (2000) tracks per inch with increasing efforts to increase track density. Disk drives have self-correcting mechanisms to partially compensate for such misalignments, but at some cost in degradation of the disk drive performance.

One possible solution to the headshift problem in hard mounted disk drives is to use an external mounting frame incorporating the mounting features and which is rigidly attached to the base of the head disk assembly. This approach will reduce the headshift problem, but negates some advantages of the hard mounted system by introducing additional components which increase material and manufacturing costs, and which increase space requirements since, as the name indicates, the external mounting frame is attached outside the head disk assembly and decreases the overall space available for components within the assembled disk drive.

An additional problem introduced by an external mounting frame is low resonant frequencies in the frame. The read/write head positioning systems of disk drives typically are very sensitive to vibrations in the 100 to 500 Hz range and vibration testing of disk drives usually is done from 5 to 500 Hz. It is desirable to have disk drive mounting system resonant frequencies occur above 500 Hz, which is very difficult to do with an external mounting frame given cost and space constraints.

Another problem of hard mounted disk drives is the noise generated during their operation. Shock mounted disk drives typically are quieter than hard mounted disk drives because vibrations from the spindle and other head disk assembly components must go through the isolation components. With typical hard mounted disk drives, the vibrations are transmitted directly to the product in which they are mounted.

With the transition to hard mounted disk drives in the electronics industry, there exists a need for a hard mount system which retains and maximizes its advantages, i.e. lower cost of materials and manufacture, and reduced space requirements, while successfully addressing the problems of headshift, resonance, and operational noise.

### SUMMARY OF THE INVENTION

This invention provides improvement over existing mounting systems for disk drives by incorporating mounting points of a hard mounting system into a cover already used to enclose components attached to a base of a disk drive assembly. The cover, which has a bottom and sides, is attached to the base at three points to enclose substantially the disk drive components, but the cover sides are spaced from the base and do not contact the base. Mounting points are located on the cover sides externally of the cover proximate the cover bottom. A printed circuit assembly is attached to the cover bottom. When the disk drive is mounted by the mounting points in a product such as a computer the base is inverted with the disk drive components suspended downward and with the cover below the base.

The mounting points externally of the cover are proximate the bottom of the cover, as is the printed circuit assembly, which allows the disk drive to be installed in conventional mounting slots without modification. Since the base is attached to the cover at three points, headshift is minimized when the cover is distorted during mounting.

While names such as base and cover are employed in describing this invention, a more general description of the invention substitutes a first support and a second support for the base and the cover, respectively, thus a first support (the base) is supported at three points in a position above and spaced from a second support (the cover) by three bosses or posts between the two supports. A head/disk assembly is attached to the first support in a position suspended between the supports but not in contact with the second support. A seal yieldably joins and seals the first support to the second support defining with the supports an enclosure sealing and enclosing the head/disk assembly therewithin. Mounting points on the second support external of the second support, are provided for mounting of the disk drive in an operating position with the first support disposed above the second support.

A damping plate is provided in an alternative preferred embodiment to reduce operational noise. The damping plate is attached atop, i.e., to the external surface of the base which it substantially covers.

An additional preferred embodiment provides substantial enclosure of a disk drive assembly with a cover and damping plate. In this embodiment, the cover and damping plate are attached together and a base of the disk drive assembly is held between them using isolators.

The above features and others of the preferred embodiments of the present invention are described in detail below.

### DESCRIPTION OF THE DRAWINGS

FIG. 1 is an isometric view of an assembled disk drive of a preferred embodiment in accordance with the present invention.

FIG. 2 is an exploded isometric view of a disk drive of a preferred embodiment in accordance with the present invention.

FIG. 3 is a cross section view of an assembled disk drive of a preferred embodiment in accordance with the present invention.

FIG. 4 is an exploded isometric view of the assembly of a disk drive of a preferred embodiment in accordance with the present invention.

FIG. 5 is an exploded isometric view of a disk drive of an alternative preferred embodiment in accordance with the present invention.

FIG. 6A is a cross section view of an assembled disk drive of an alternative preferred embodiment in accordance with the present invention.

FIG. 6B is an enlarged partial cross section view of an assembled disk drive of an alternative preferred embodiment in accordance with the present invention taken along lines 6B-6B in FIG 6A.

FIG. 7 is a partial exploded isometric view of a disk drive of a second alternative preferred embodiment in accordance with the present invention.

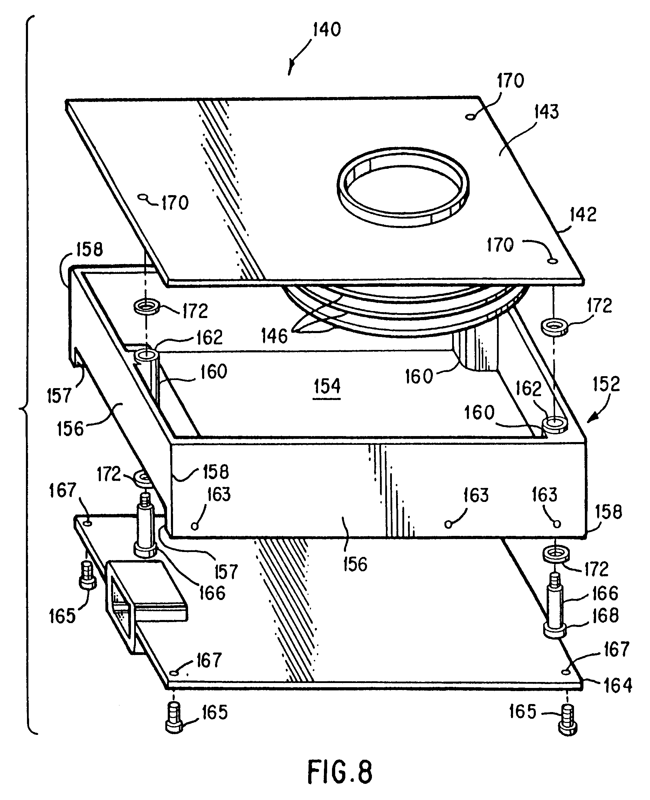

FIG. 8 is an exploded isometric view of a disk drive of a third alternative preferred embodiment in accordance with the present invention.

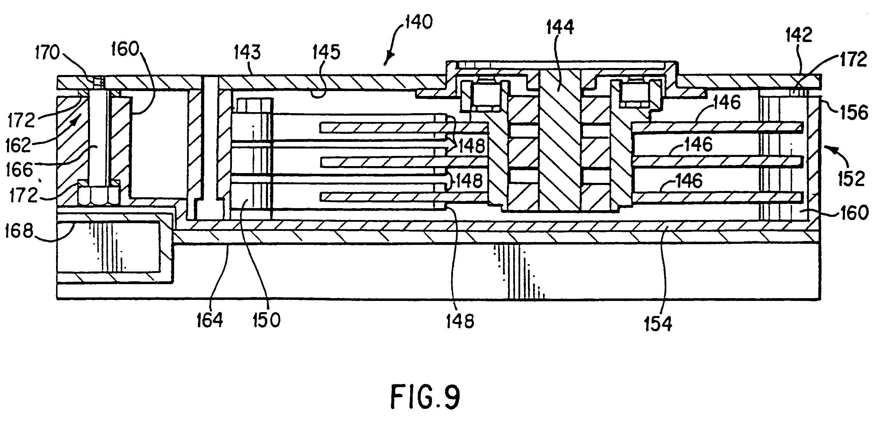

FIG. 9 is a cross section view of an assembled disk drive of a third alternative preferred embodiment in accordance with the present invention.

### DETAILED DESCRIPTION OF THE INVENTION

A new disk drive 10 with an inverted base 20 is shown in FIG.'s 1-3. The base 20 is a substantially flat, rectangular plate with an upper surface 21 and a lower surface 23. The base can be constructed from a number of materials with suitable characteristics. The material most commonly used for the substantially flat base of this embodiment generally is constructed from steel due to its strength and vibration characteristics. Another type of disk drive uses a tub-type base which is constructed from diecast aluminum. The tub-type base has raised sides and greater resistance to twisting forces than the flat base. The advantages of the present invention accrue to disk drives regardless of the base type used. The flat base 20 of these embodiments is for illustrative purposes only.

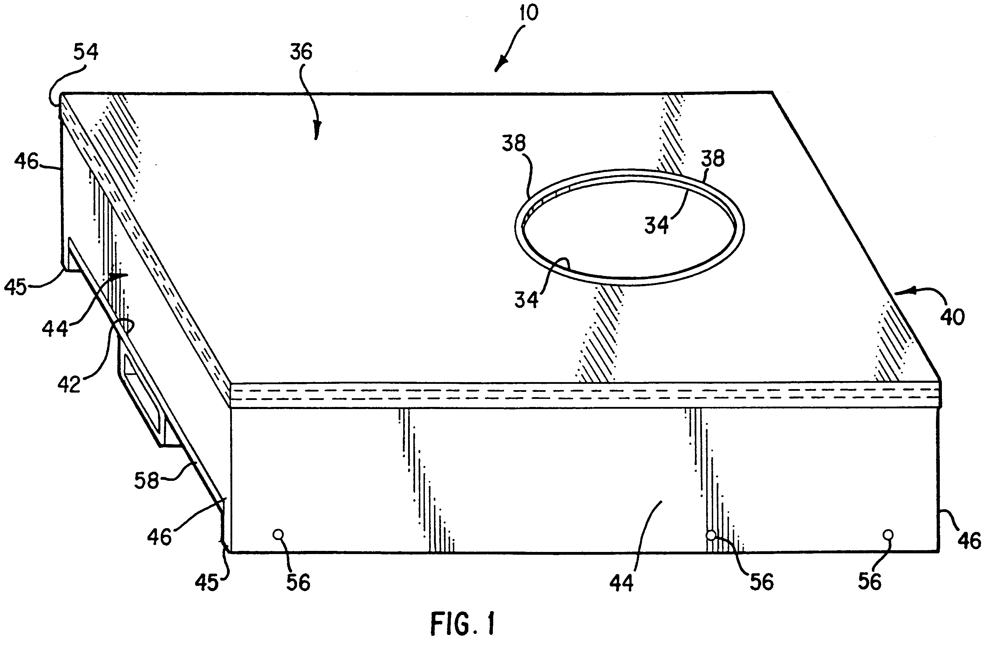

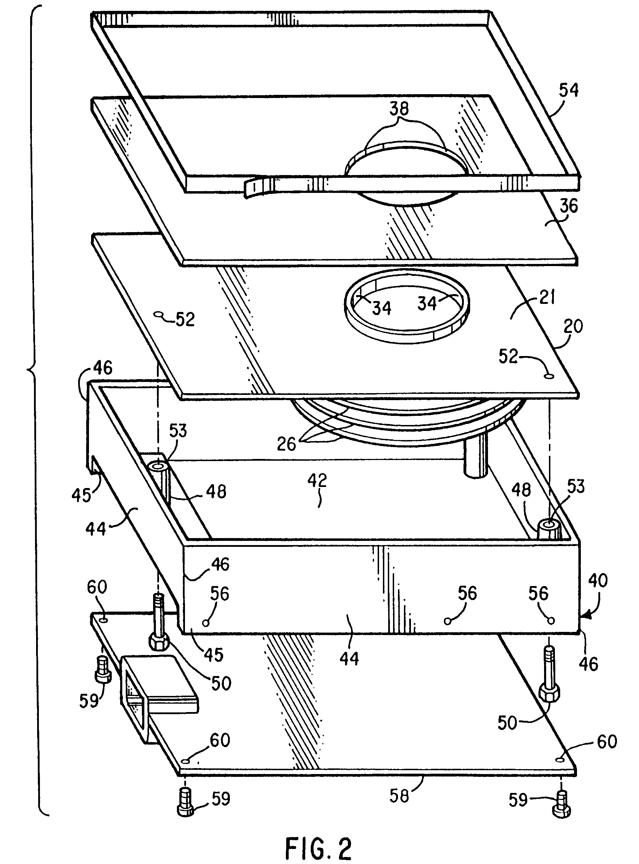

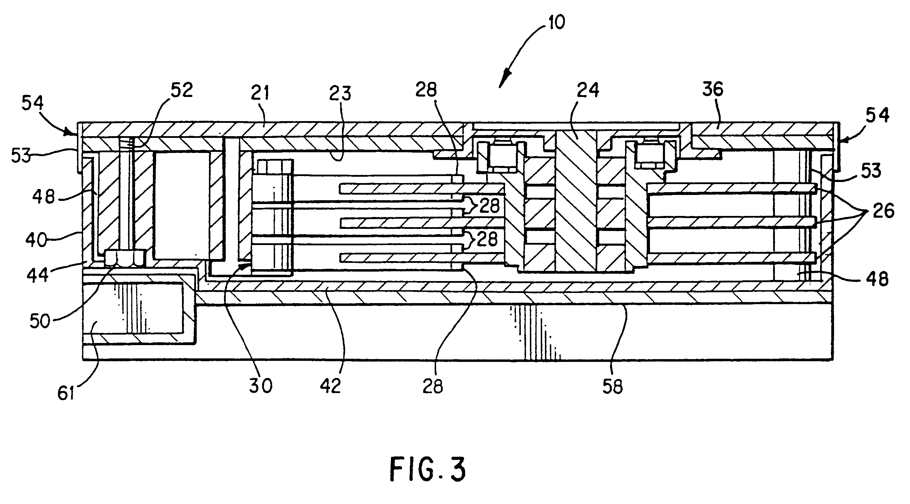

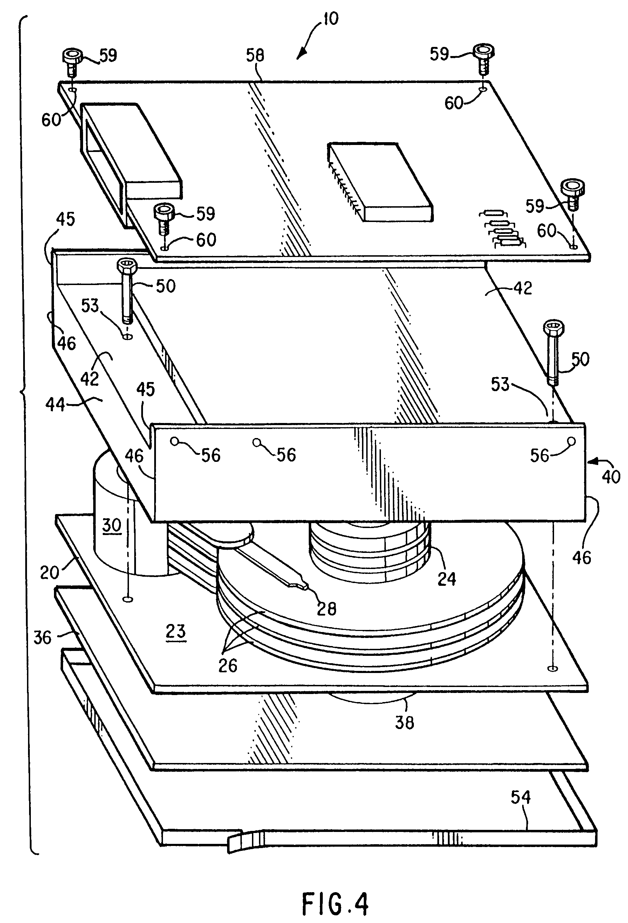

Referring generally to FIG. 3, attached to and suspended downward from the lower surface 23 of the base 10 are head disk components. As seen in FIG. 3, these include a spindle 24 and platters 26, read/write heads 28, and a disk drive, head positioning system 30. When assembled together, the base 20 and the head/disk components 32 constitute a head/disk assembly 10, FIG. 4. One other feature of the head/disk assembly 32 is an aperture 34, FIGS. 1 & 2, in the base 20 to accommodate the attachment of the spindle 24 to the base 20. Other disk drive configurations use spindles that do not protrude through the base.

Attached to the upper surface 21 of the base 20 is a damping plate 36, which substantially covers the base 20. The damping plate 36 reduces audible noise and can be made from a variety of suitable materials well-known to those skilled in the art. Materials which may be useful as a damping plate 36 include a metal plate attached with a viscoelastic adhesive, a weighted plastic plate impregnated with heavy ceramic particles, or a sound absorbing foam adhered to the surface. In this embodiment, the damping plate 36 has an aperture 38, visible clearly in Fig. 2, that is slightly larger than and aligned with the base aperture 34. This enables the damping plate 36 to fit against the upper surface 21 of the base 20 in the head disk assembly 10, as is best illustrated in FIG. 3.

Attached to the lower surface 23 of the base 20 and substantially enclosing the components of the head disk assembly 10 is a cover 40. The cover has a bottom 42 and sides 44 which extend from the bottom and are connected at adjacent edges 46. The cover bottom 42 extends downward proximate its connection to two cover sides to form lips 45. The lips 45 extend downward from the cover bottom 42, as viewed. In this embodiment, the cover 40 is attached to the lower surface 23 of the base 20 with three hollow bosses 48 into which screws 50 can be inserted and tightened into attachment holes 52 in the base 20 which are aligned with the bosses 48. The bosses 48 extend upwardly from the cover bottom 42, and each has an end 53 opposite from the cover bottom.

When the cover 40 is attached to the base 20 by the bosses 48, the only metal-to-metal contact between the cover 40 and the base 20 occurs between the boss ends 53 and the corresponding areas of the lower surface 23 of the base 20 proximate the attachment holes 52. The cover sides 44 do not extend far enough to contact the base 20. In the head/disk assembly 10, the space between the cover sides 44 and the base 20 is sealed with a seal 54 to prevent contamination of the head/disk assembly. The seal can be made of a number of flexible materials well known to those skilled in the art. Gaskets made of a material, such as soft foam, also can be placed between the cover sides and the base and used instead of the seal discussed above.

The cover 40 also has mounting points on the lips 56 which are used to install the head/disk assembly 10 in a product. The mounting points 56 can take a number of different configurations. In this embodiment, the mounting points 56 are threaded holes in the cover lips 45 proximate the cover bottom 42 into which screws can be inserted and tightened after the disk drive is installed. The position of the mounting points 56 in the lips 45 prevents any breach of the enclosed head disk assembly.

Attached to the cover bottom 42, opposite the base 20, is a printed circuit assembly 58 which contains the electronics necessary to allow the disk drive 10 to operate and communicate with a computer. The printed circuit assembly 58 fits between the cover lips 45 and is attached to the cover bottom with screws 59 passed through holes 60 in the printed circuit assembly. A plug connector 61 to plug the disk drive into a computer is part of the printed circuit assembly 58.

The head/disk assembly 10 is shown in FIG.'s 1-3 in the orientation it would be in when installed in a computer. As compared with existing disk drives, the disk drive manufactured in accordance with the present invention has an inverted base or, in other words, the disk drive is mounted upside down relative to conventional disk drives. As described above, the components of the head disk assembly 10 are suspended downward from the base lower surface 23 in contrast to conventional disk drives in which disk drive components are attached to and extend upward from a base. Similarly, the cover 40 in this embodiment is attached to the lower surface 23 of the base 20 by the bosses 48 to enclose the head/disk assembly components, while in a conventional disk drive, a cover is attached atop the base.

A conventional disk drive has mounting points in a base or in an external mounting frame attached to the base with a printed circuit assembly attached beneath the base. In the present embodiment, the placement of the mounting points 56 on the cover lips 45 proximate the cover bottom 42 together with the attachment of the printed circuit assembly 58 to the cover bottom 42 enables the disk drive 10 to be installed in and electronically connected to existing computers without any modifications while retaining the benefits of the present invention.

Another advantage of having the mounting points 56 in the cover 40 is reduced headshift. Headshift is markedly reduced by using only three points of contact between the cover 40 and the base 20, which minimizes the transmission of distortion from the cover 40 to the base 20 and the attached components. That the cover sides 44 do not contact the base further reduces the transmission of distortion from the cover 40 to the base 20. The present embodiment, as well as the other embodiments, achieve markedly reduced headshift without using external mounting frame systems. The rigid structure of the disk drive also causes the disk drive mounting system to have a higher resonant frequency than that of external mounting frame systems. The advantages of reduced headshift, lack of external mounting frame systems, and higher resonant frequency of the present invention are achieved both with the substantially flat base used in the preferred embodiments herein and with disk drives using the tub-type base.

During the manufacture of a conventional disk drive, the various disk drive components are attached to a base with devices such as screws. The screws or other attachment devices must enter from both above and below the base which requires that the base be rotated one or more times to allow the screws to be inserted through both upper and lower surfaces to attach the components to the base. As shown in FIG.4, the disk drive 10 is assembled with the base 20 in a noninverted orientation placing the base lower surface 23 above the base upper surface 21. With the arrangement of the cover 40, printed circuit assembly 58, and other disk drive components of this disk drive, all of the components can be attached to the base and the disk drive assembled by inserting screws or other attachment devices from one direction without rotating the base. By eliminating the need to rotate the base during the assembly process, that process is significantly simplified and less expensive than the assembly process for conventional disk drives.

The base 20 is constructed from thicker material than the cover 40, and is superior to the cover 40 in reducing the transmission of noise.

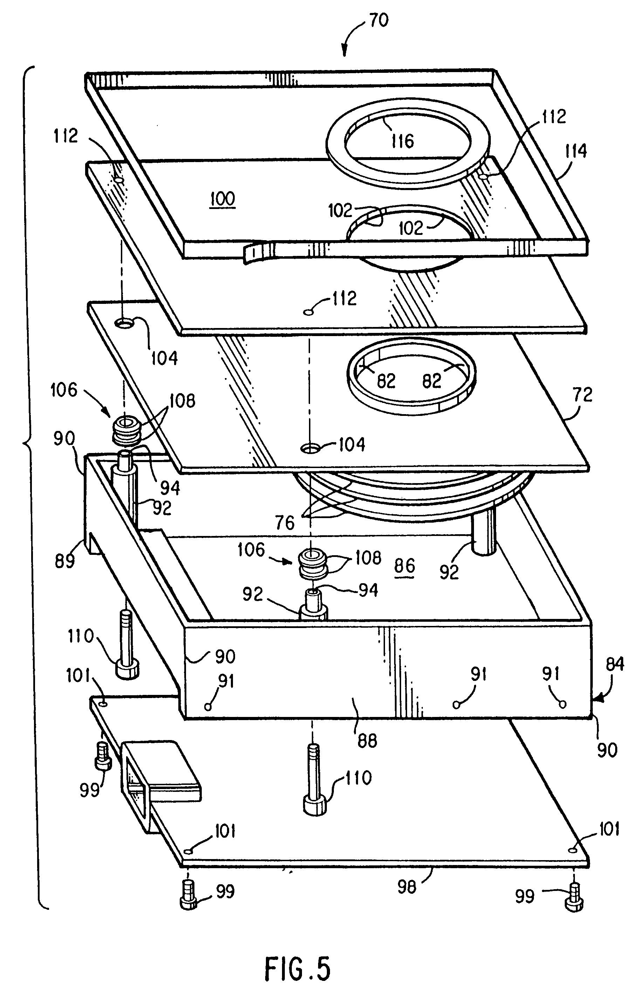

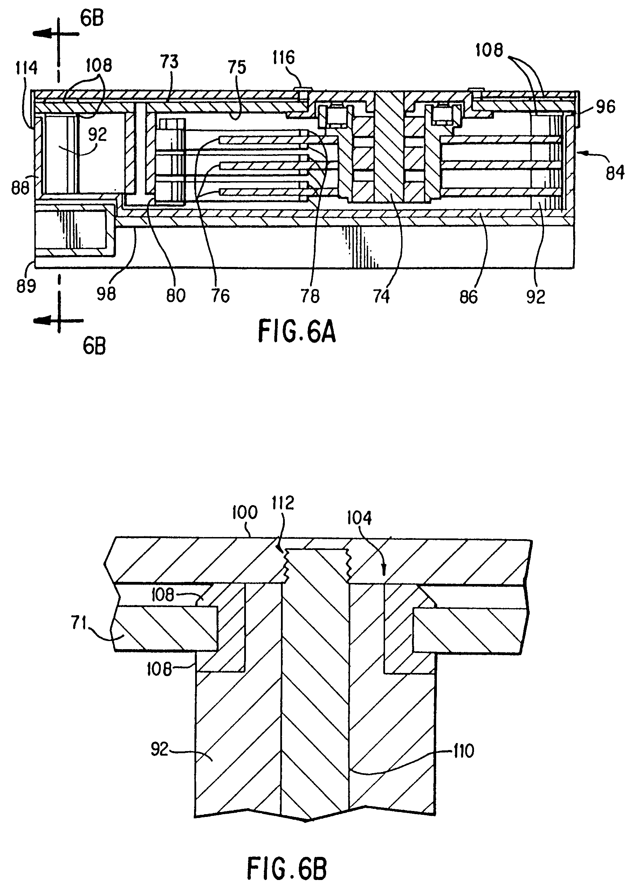

In an alternative preferred embodiment of the present invention, a disk drive 70 with an inverted base 72 with an upper surface 73 and a lower surface 75, is shown in FIG.'s 5, 6A and 6B. As with the above embodiment, the head/disk components, including a spindle 74 and attached platters 76, read/write heads 78, and drive head positioning system 80, FIG 6A are attached to and suspended downward from the lower surface 75 of the base 72 with an aperture 82, FIG. 5, in the base 72 to accommodate the spindle 72.

As with other embodiments, there is a cover 84 below and attached to the base 72 that substantially encloses the disk drive components. The cover has a bottom 86 and sides 88 which extend upward from the bottom and are connected at adjacent edges 90. The lips 89 extend downward from the cover bottom 86. Three hollow bosses 92 extending upward from the cover bottom are the points of attachment to the base. Each boss has an end 94 opposite from the cover bottom. At each end, a circular groove 96 extends around the boss. Attached to the cover bottom opposite the base is a printed circuit assembly 98, similar to the above embodiment. The printed circuit assembly fits between the cover lips 89 and is attached to the cover bottom with screws 99 passed through holes 101 in the printed circuit assembly.

This embodiment also has a damping plate 100 atop the base upper surface 73. The damping plate has an aperture 102 that is larger than the base aperture 82 for the spindle 74. In addition to damping noise, the damping plate is used in cooperation with the cover 84 to attach the cover to the base 72. In the base, there are three attachment holes 104 that are aligned with the bosses 92 in the cover. A grommet 106 made of rubber or other elastomeric material is inserted into each attachment hole. Each grommet has circular lips 108 that extend out from the attachment hole and cover a portion of the base upper and lower surfaces.

When the cover is in position, the end 94 of each boss 92 passes through the corresponding grommet 106 and attachment holes 104 and contacts the damping plate. Screws 110 or other attachment devices are inserted into the bosses and threaded holes 112 in the damping plate that are aligned with the bosses and attachment holes in the base. When the screws are tightened, the base is held by grommet 106 in relation to the damping plate. The grommets in the base attachment hole act as isolators in preventing any metal-to-metal contact between the base, and the cover and damping plate. The cover sides 88, like the cover sides 44 of the previous embodiment, do not contact the base. The space between the sides and the base is sealed with a seal 114. Similarly, the damping plate aperture does not contact the base upper surface 73, spindle 74 or the base aperture 82, and the space between them is sealed with a circular seal 116.

The disk drive 70 of this embodiment retains all of the advantages discussed in the previous embodiment while further reducing headshift and transmitted noise. When the disk drive is mounted in a computer, the cover 84 will be slightly distorted, as discussed above, In this embodiment, the grommets 106 acting as isolators absorb much of the distortion and prevent it from being transmitted to the base 72 and attached head disk components. The result is a reduction in headshift over the previous embodiment and a further substantial reduction over conventional disk drives.

The reduction of transmitted noise is due to the enclosure of the disk drive components by the cover 84 and the damping plate 100 without any metal-to-metal contact between them and the base 72. The disk drive 70 is much quieter than the previous embodiment or conventional disk drives.

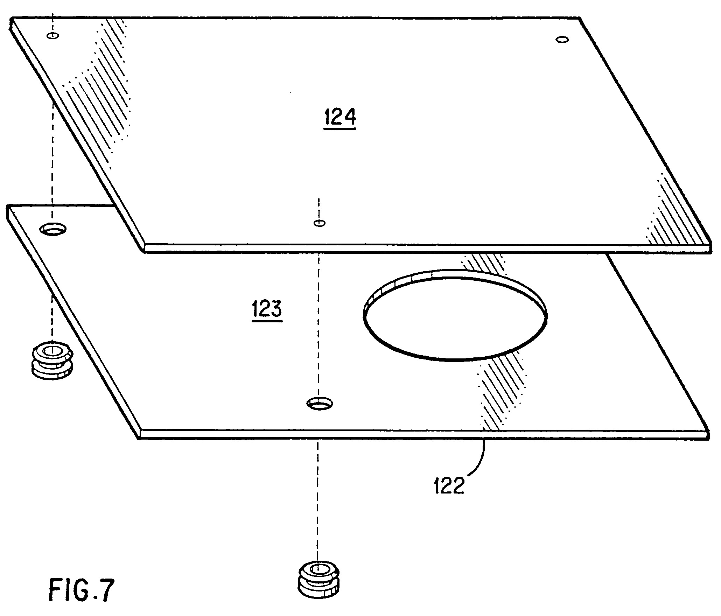

A second alternative preferred embodiment illustrated in FIG. 7 is a variation of the preceding embodiment which reduces transmitted noise even further. The embodiments are virtually identical with only a few differences. In this variation, a base 122 has a substantially smooth upper surface 123. This allows the use of a damping plate 124 without an aperture and the complete enclosure of the head disk components which further reduces transmitted noise.

A third alternative preferred embodiment is illustrated in FIG.'s 8-9. This embodiment shares a number of features with the above embodiments. A disk drive 140 has an inverted base 142 with an upper surface 143 and a lower surface 145 to which head disk components, including a spindle 144 and platters 146, read/write heads 148, and drive head positioning system 150, are attached and from which they are suspended downward.

Attached to the base lower surface 145 and substantially enclosing the disk drive components is a cover 152 with a bottom 154 and sides 156 which extend upward from the bottom and are connected at adjacent edges 158. The cover bottom extends downward proximate its connection to two cover sides to form lips 157. The lips 157 extend downward from the cover bottom 154. Also extending upward from the cover bottom are three hollow bosses 160 with each having an end 162 opposite from the cover bottom. As with all embodiments of this invention, disk assembly mounting holes 163 are in the cover sides proximate the cover bottom. A printed circuit assembly 164 is attached to the cover bottom opposite the base. The printed circuit assembly fits between the cover lips 157 and is attached to the cover bottom with screws 165 passed through holes 167 in the printed circuit assembly.

Similar to the above embodiments, the cover 152 attaches to the base lower surface 145 using screws 166 with heads 168 or other attachment devices which are inserted into the hollow bosses 160 and tightened into attachment holes 170 which are located in the base and aligned with the bosses. In this embodiment, washers 172 made of rubber or other elastomeric material act as isolators. The washers 172 are placed under the screw heads 168 to prevent metal-to-metal contact between the screw heads 168 and the cover 154 when the screws 166 are tightened. Washers 172 also are placed around each of the screws 166 between the boss free ends 162 and the base lower surface 145 proximate the attachment holes to prevent metal-to-metal contact between the cover and the base.

When the disk drive 140 is mounted in a computer, the cover 152 distorts slightly. The washers 172 between the screw heads 168 and the cover, and between the boss free ends 162 and the base lower surface 145 absorb much of the distortion to minimize headshift as in the other alternative preferred embodiments. The lack of metal-to-metal contact between the base 142 and the cover also reduces audible noise transmission, although the absence of a damping plate limits the amount of the reduction.

Each of the inverted base embodiments of the present invention provide improvements over existing disk drive mounting systems regardless of which is used. By using only three points of contact between a cover and a base and taking advantage of the disk drive's rigid structure, headshift is reduced and the resonant frequency is higher without resorting to external mounting frame systems. Absence of external mounting systems results in fewer parts used and a more compact size for the assembled head disk assembly as opposed to conventional disk drives.

The configuration of the disk drive with the base on top, the head disk components suspended downward from the base, the cover attached to the base from below and the printed circuit assembly attached to the cover from below allows the disk drive of the present invention to be assembled on the base without rotating it. This simplified assembly together with fewer part results in reduced manufacturing costs. Similarly, audible noise reduction is achieved due to the base position above the disk drive components. This audible noise reduction can be improved in those embodiments using a damping plate atop the base and/or isolators which eliminates any direct metal-to-metal transmission path. All of these advantages are present in any disk drive of the present invention regardless of the base type used. Also, while the above embodiments utilize bases and covers of a rectangular shape, it is clear that other shapes, such as a triangle or an oval, may be used.

All of the above improvements are achieved without sacrificing the advantages of existing hard mounting systems, such as improved shock performance. In addition, a disk drive with the inverted base can be installed conventionally in a computer without any modification of the computer slot or the disk drive which further decreases the cost of the disk drive.

### INDUSTRIAL APPLICABILITY

The inverted base configuration and method for assembly of disk drives with the inverted base of the present invention are applicable for any disk drives where headshift, audible noise reduction, shock performance, and/or cost of assembly are of concern.

## Claims

1. A disk drive comprising:
a disk drive cover (40) having a bottom (42) and at least three attached sides (44) extending upward from said bottom (42) and being connected at adjacent edges;
a disk drive base (20);
a head/disk assembly (26,28) attached to said base (20);
means (48) attaching said cover at three points (52) to said base (20) supporting said base (20) above said cover (40) in spaced relation to said cover (40) with said head/disk assembly (26,28) suspended from said base (20) and disposed between said cover (40) and said base (20);
a seal (54) yieldably sealing said cover to said base;
mounting points (56) on said cover for mounting said disk drive in an operating position with said base (20) positioned above said cover (40), and
a printed circuit assembly (36), said printed circuit assembly (36) attached to said cover proximate said cover bottom (42) outside of said cover (40) in a position opposite said base (20)

2. A disk drive according to Claim 1, in which said means (48) attaching said cover (40) to said base (20) comprises at least three bosses (48), said bosses (48) extending between said cover (40) and said base (20) and spacing said cover (40) from said base (20); and
means attaching said cover (40) and said base (20) to said bosses (48) to secure said spacing of said cover (40) and said base (20) .

3. A disk drive according to Claim 2, further comprising:
a damping plate (36), said damping plate (36) attached to said bosses (48) and to said base (20) , exterior to said base (20) in a position substantially covering said base (20).

4. A disk drive according to Claim 3, in which:
said means (50) attaching said base (20) to said bosses (48) comprises an isolator (106) between each boss and said base (20).

5. A disk drive according to Claim 3, in which:
a. said means attaching said cover (40) and said base (20) to said bosses (48) comprises an isolator (106) between each boss and said cover and an isolator (106) between each boss and said base (20).

6. A disk drive for mounting in an inverted position, comprising:
a. a base (20) having opposite sides and a peripheral portion;
b. disk drive components (26. 28) comprising a head/disk assembly (26,28) mounted at one side (23) of said opposite sides (21,23) of said base (20) ;
c. a cover (40) having a peripheral portion;
d. means (48,50) connecting said cover (40) to said base (20) at least three points (52) and supporting said cover (40) spaced from said base (20) in a position defining a gap between said peripheral portion of said cover (40) and said peripheral portion of said base (20) ;
e. a seal (54) yieldably engaging said cover (40) and said base (20) at each said peripheral portion in a position sealing said gap and permitting relative movement between the peripheral portion of said cover (40) and the peripheral portion of said base (20), and
f. disk drive mounting points (56) on said cover (40) for mounting said disk drive in an inverted position with said base (20) positioned above said cover (40).

7. A disk drive according to claim 6, further comprising:
a. a printed circuit assembly (58) mounted to said cover (40), external to said cover (40), in a position substantially parallel to said base (20).

8. A disk drive comprising:
a. a first support (20);
b. a second support (40);
c. three bosses (48) connecting and spacing apart said first support (20) and said second support (40) with said first support (20) positioned above said second support (40);
d. a head/disk assembly (26.28) attached to and suspended below said first support (20) between said first support (20) and said second support (40) but not in contact with said second support (40).
e. a seal yieldably (58) connecting and sealing said first support to said second support (40) providing a sealed enclosure with said first support (20) and said second support (40) for enclosing therewithin said head/disk assembly (26,28), and
f. disk drive mounting means (56) on said second support (40) for mounting said disk drive in an operating position with said first support (20) above said second support (40).
